# EUROPEAN PATENT SPECIFICATION

(11) **EP 1 119 465 B1**
(45) Date of publication and mention of the grant of the patent: **21.04.2004**
(21) Application number: 99947730.0
(22) Date of filing: 04.10.1999
(51) Int. Cl.: B60H 1/32, B60H 1/00

(54) **VEHICLE AIR CONDITIONING**
FAHRZEUGKLIMAANLAGE
SYSTEME DE CLIMATISATION POUR AUTOMOBILE

(30) Priority: 07.10.1998 GB 9821743
(43) Date of publication of application: 01.08.2001
(73) Proprietor: Calsonic Kansei UK Limited, Llanelli, Carmarthenshire SA14 8HU (GB)
(72) Inventor: JACKSON, Adrian, West Corss SA3 5TT (GB); REDHEAD, Roy, Builth Wells Powys LD2 3TF (GB)
(74) Representative: Davies, Gregory Mark
(86) International application number: PCT/GB1999/003266
(87) International publication number: WO 2000/020240

(56) References cited:
- DE-A- 19 651 279
- US-A- 5 478 274
- PATENT ABSTRACTS OF JAPAN vol. 014, no. 203 (M-0966), 25 April 1990 (1990-04-25) & JP 02 041917 A (NIPPON DENSO CO LTD), 13 February 1990 (1990-02-13)

## Description

The present invention relates to vehicle air conditioning.

Vehicle air conditioning systems are known which comprise evaporators positioned to cool airflow upstream of heater units, which heater units are operable to add heat to the air downstream of the evaporator when required. The evaporator also acts as a de-humidifier for the air. Air is drawn in from the exterior of the vehicle, or recirculated from the vehicle cabin and directed through one or both of the evaporator and heater dependent upon the ambient conditions (such as the humidity or temperature of the air passing through the system) and the system requirements set by the passenger.

The temperature difference between the refrigerant fluid in the evaporator and the air passing -through the evaporator provides the driving mechanism which causes heat transfer to occur. The greater the ambient temperature, the greater is the heat flux between the ambient air and the evaporating medium; consequently the easier it is for the refrigerant to achieve the required enthalpy rise in the evaporator to effect full evaporation of the refrigerant. When ambient temperatures are low (such as in cold climates) achieving an enthalpy change sufficient for adequate evaporation of the refrigerant in the evaporator becomes a problem. A level is reached at which ambient air temperature is so low that complete evaporation is not possible. When this occurs, the system becomes increasingly inoperable because, amongst other things, incompressible (un-evaporated) refrigerant can enter the compressor driving the system.

Attempts have been made to alleviate the above mentioned problems by directing heat from other sources to heat the refrigerant downstream of the evaporator.

Examples of prior art vehicle air conditioning systems are described in, for example, DE-A-19651279, US-A-5478274 and JP-A-02041917.

In particular DE-A-19651279 shows the preamble of claim 1.

An improved arrangement has now been devised.

According to the present invention, there is provided a vehicle air conditioning system comprising:
i) an air cooling unit;
ii) air heating means positioned upstream of the air cooling unit; and
iii) second air heating means downstream of the air cooling unit, the second air heating means comprising a condenser,
first heater bypass means (9a) is provided enabling at least some of the air flow to bypass the first air heating means and/or second heater bypass means (9b) is provided enabling at least some of the air flow to bypass the second air heating means.

The invention operates by utilising the upstream heating means to load the air temperature before the air reaches the air cooling unit so as to consequently increase the heat flux across the air cooling unit. The external operational temperature window for the air conditioning cycle is consequently widened because the system is able to tolerate a lower ambient external air temperature range.

Furthermore the humidity control of the conditioned air may be improved.

It is preferred that the air cooling unit comprises part of a refrigerant fluid circuit, the air cooling unit preferably comprising an evaporator.

The condenser comprising the second air heating means beneficially comprises part of a refrigerant fluid circuit.

A refrigerant fluid circuit comprising the air conditioning system desirably includes:
i) an evaporator comprising the air cooling unit;
ii) a condenser arranged downstream of the air cooling unit;
iii) a condenser remote from the flow of conditioned air; and,
iv) switching means for switching the flow of refrigerant to pass through the evaporator and preferentially one or other of the condensers.

The refrigerant fluid circuit preferably comprises sub circuits each having a common portion passing through the evaporator and discrete portions each having a respective condenser.

The bypass means is preferably adjustable permitting varying proportions of air to pass through and bypass the heating means according to system requirements. Additionally, the output of the heater means may be manipulated to vary or prevent the heating effect on the airflow.

The air heating means upstream of the air cooling unit may comprise a heater supplied with heat from the engine cooling circuit of the vehicle, or, alternatively, an electrical heating device. Other heating arrangements are also envisaged making use of other heat sources of the vehicle, for example fuel burners or waste heat from other sources.

According to a second aspect, the invention provides a method of controlling a vehicle air conditioning system comprising:
i) an air cooling unit;
ii) air heating means positioned upstream of the air cooling unit; and
iii) second air heating means downstream of the air cooling unit, the second air heating means comprising a condenser
the method comprising:
a) monitoring system demand and/or ambient conditions interior and/or exterior of the vehicle; and,
b) modifying the passage of air in response to the monitoring of step a) to change the proportion of air by passing the air heating means or second air heating means to vary between 0-100 percent; and/or,
c) modifying the heat output of the heating means; and/or,
d) modifying the cooling effect of the cooling unit.

The invention will now be further described in specific embodiments by way of example only and with reference to the accompanying drawings in which:
Figure 1 is a schematic layout of a preferred system according to the invention;
Figure 2 is a schematic layout of an alternative embodiment of a system according to the invention; and
Figures 3 to 7 show alternative configurations of controlled air flow through the system of Figures 1 and 2 to achieve different results.

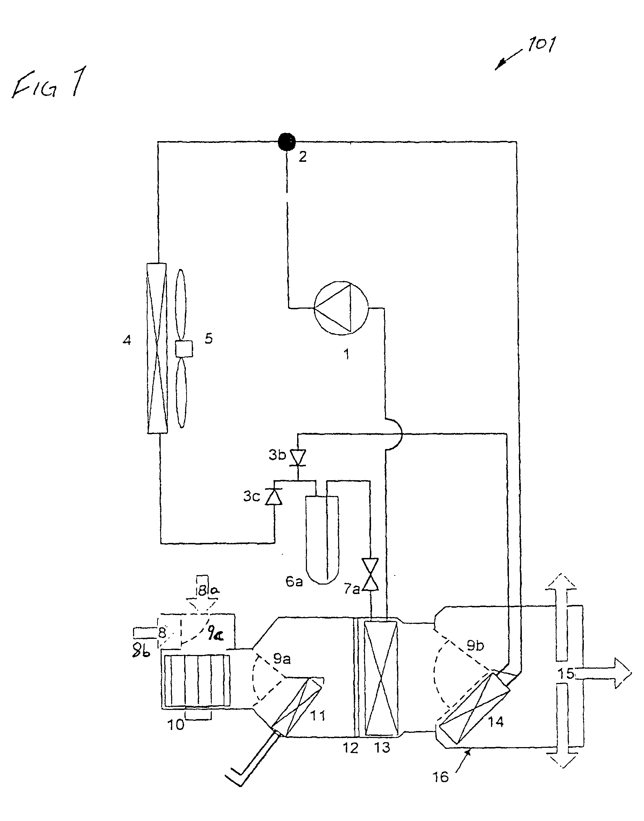

Referring to the drawings, and initially to Figure 1, there is shown an air conditioning system 101 comprising a refrigerant circuit including a compressor 1, primary condenser 4, thermal expansion valve 7a and evaporator 13. Compressor 1 compresses the refrigerant vapour to a high pressure and temperature. A directional valve 2 has an inlet from the compressor and can be configured to direct flow toward the primary condenser 4. The condenser 4 is located at the front of the vehicle bay, behind the air inlet grill of the vehicle (not shown). Air is passed through the primary condenser 4 aided by a fan 5.

Subsequent to exiting the condenser 4, the refrigerant is directed through one way valve 3c to a receiver-dryer 6a. Receiver-dryer 6a acts as a reservoir for refrigerant that accommodates variation in demand from the refrigeration circuit. It also separates condensed liquid refrigerant from vapour refrigerant to ensure that only liquid phase refrigerant passes to the expansion valve 7a. Receiver-dryer 6a commonly contains a desiccant designed to remove any moisture from the circulating refrigerant (and also commonly contains filter material to entrap any particulate impurities).

Thermal expansion valve 7a performs irreversible, adiabatic expansion of the condensed liquid into low pressure liquid ready for evaporation in the evaporator 13. The throttling function of expansion valve 7a is controlled through feedback of temperature and pressure for vapour exiting the evaporator 13.

The evaporator 13 is positioned in ducting 16 at one end of which is an air inlet 8 (which may be either a "fresh-air" intake 8a from externally of the vehicle, or a circulating air intake 8b from inside the vehicle - or a proportion from each according to the position of diverter 9c). The ducking 16 expends to in-cabin distribution vents 15 distributing the conditioned air into the vehicle cabin. A blower and motor 10 draws air into the distribution ducting 16. Within the ducting 16 air flow diverters 9a, 9b direct the air flow to follow one of several potential selected paths. In the ducting 16, upstream of the evaporator 13 is provided a heater 11. This heater facilitates heat transfer to the air crossing across it such that the air is heated from passage through this component.

Downstream of heater 11 and immediately upstream of evaporator 13 is positioned an optional filter 12 used to filter particulate matter and also vehicle pollutant (eg NOx) from the air being passed into the vehicle cabin environment.

Downstream of evaporator 13 is positioned a secondary condenser 14 to provide a heat source that can be used to heat air, having passed through evaporator 13, prior to distribution into the interior of the vehicle cabin. Valve 2 is switchable to cause refrigerant flow (under the influence of compressor 1) through the secondary condenser 14 rather than the primary condenser 4. The refrigeration circuit thereby effectively comprises two sub-circuits having a common portion (including a common evaporator) and separate, alternative switchable portions including separate condensers. The nature and purpose of the switching between sub-circuit portions is described in detail below.

Respective diverters 9a and 9b are positioned immediately upstream of respective heater 11 and secondary condenser 14 and switchable (by the air conditioning control) between positions in which air is permitted to pass through the relevant heater 11 or secondary condenser 14, or substantially inhibited from doing so.

The heater 11, evaporator 13 , secondary condenser 14 and airflow diverters 9a,9b comprise the main air conditioning and distribution components for the vehicle air conditioning system. In use, control of the system may be used to produce various air conditioning effects depending on the desired, and ambient, conditions.

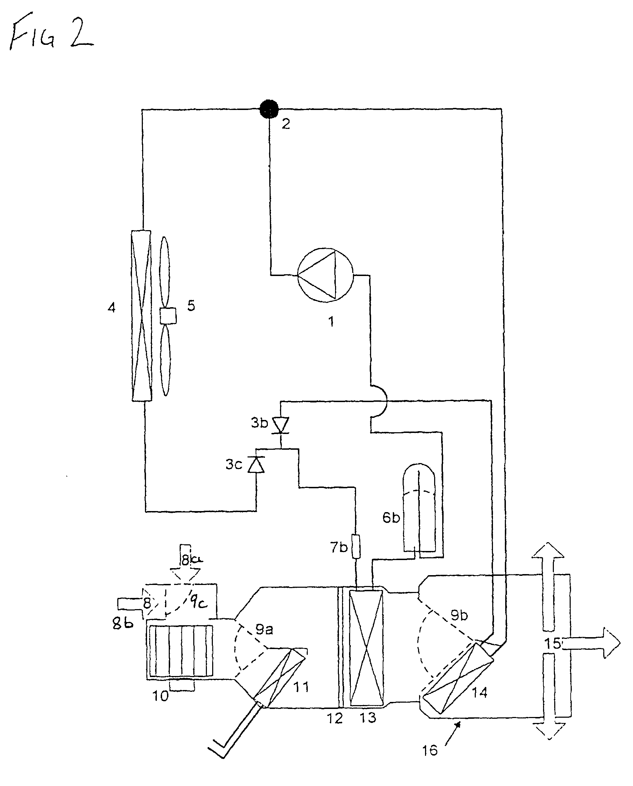

The arrangement shown in Figure 2 is generally similar to the arrangement shown in Figure 1, however the receiver dryer 6a and expansion valve 7a are replaced with an accumulator 6b and orifice tube 7b. Accumulator 6b acts as a reservoir for unevaporated refrigerant, and also separates unevaporated refrigerant from vapour to ensure that only vapour passes to the compressor 1. Accumulator 6b removes moisture from the circulating refrigerant and can trap particulate impurities. Orifice tube 7b, similarly to expansion valve 7a, performs irreversible adiabatic expansion of condensed liquid into low pressure liquid ready for evaporation in evaporator 13. For more sophisticated orifice tube designs, the orifice can be varied to increase system flexibility in response to refrigeration demand fluctuation.

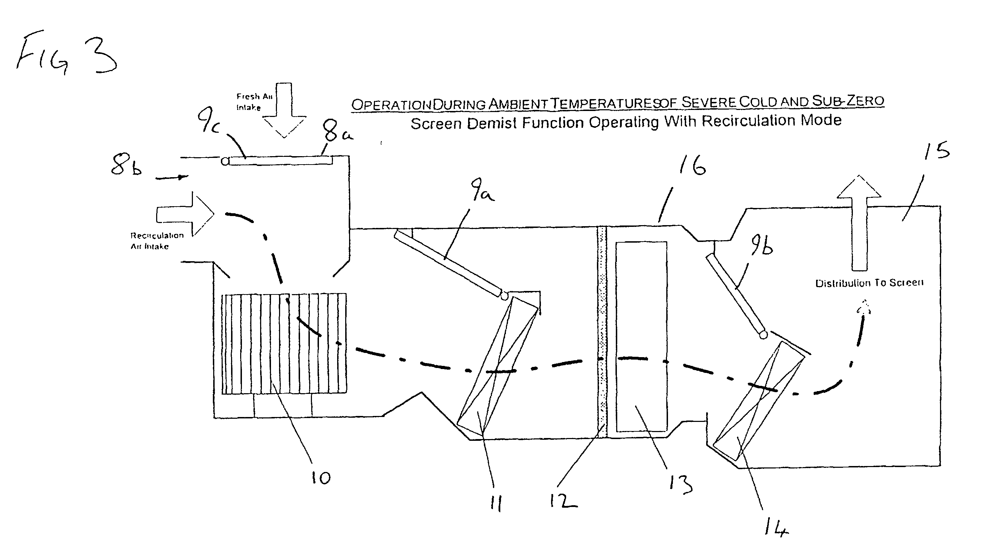

Referring additionally to Figures 3 to 7, the operation of the air conditioning system according to the invention can be varied by the air conditioning control according to external and/or desired internal conditions.

As shown in Figure 3, during cold or sub zero ambient temperature conditions, the principle requirement is to heat the in-cabin environment. Where external temperature levels are sensed to be below a determined lower limit, the air-intake 8 is controlled such that diverter 9c closes external air intake 8a such that external air is prevented from accessing the in-cabin system. Air drawn from inside the vehicle, through action of the blower unit 10 drawing air through recirculation intake 8b, to facilitate complete air recirculation. The airflow is directed, utilising air flow diverter 9a, across the heater 11. This raises air temperature (dependent upon the heat energy available from heater 11) to the desired level. Evaporator 13 temperature sensing delays operation of the refrigerant circuit until a predetermined minimum temperature air-on criterion is reached.

Once the minimum air temperature criterion is reached, operation of the refrigeration circuit is commenced by engaging compressor 1, causing high pressure/temperature refrigerant vapour to be directed toward valve 2. Diversion of vapour toward component 14, the secondary condenser, is achieved through action of valve 2.

Upon entering the secondary condenser 14, the refrigerant vapour is encouraged to condense via heat exchange with the airflow across unit 14, thereby releasing the latent heat of condensation to the air-stream and raising its temperature. Upon exit from unit 14, refrigerant liquid (and any residual vapour) travel to the receiver drier unit 6a, via the unidirectional valve 3b. Valve 3c avoids flow into the redundant circuit to unit 4. Within receiver-dryer 6a, the refrigerant liquid is filtered, desiccated, stored and separated from any vapour fraction. This action ensures only high pressure liquid is drawn from receiver-dryer 6a to enter the expansion valve 7a.

Expansion valve 7a facilitates irreversible, adiabatic expansion of condensed liquid into low pressure liquid ready for evaporation in evaporator 13. The throttling function of this valve is controlled through temperature and pressure feedback measurement from the vapour condition exiting the evaporator 13. Upon entry into the evaporator, the refrigerant liquid is encouraged to evaporate via heat exchange with the airflow across unit 13, thereby drawing the latent heat for vaporisation from the air stream and lowering the air stream temperature (the air temperature having been previously raised via passage through heater unit 11). Upon exit from unit 13, refrigerant vapour travels back to the compressor component 1.

Operating in the mode described and shown in figure 3, recirculated air is heated by component 11, passes across optional filter 12 and enters the evaporator 13. Heat exchange takes place across 13, resulting in the consequent lowering of the air temperature. This encourages dehumidification because the vapour solubility for moisture is reduced with reducing temperature and moisture from the air stream is encouraged to condense upon the colder surface evaporator 13. Cooled air with reduced humidity exits from evaporator 13 and is directed, via the action of diverter 9b, onto the secondary condenser 14. The enthalpy drawn from the air during passage across the evaporator 13 (latent heat of vaporisation), is now relinquished to the air via the condensing action of the refrigerant within secondary condenser 14. The reduced humidity air is then directed to the mixing and distribution section. 15, and subsequently into the car interior airspace via ducts and vents.

The recirculation mode is controlled against the temperature levels within the heater 11. When sufficient temperatures are reached in this heater 11 to heat an influx of ambient, external air above the minimum evaporator air on temperature criterion, then such fresh air is introduced to avoid potential, excessive dehumidification of the in-cabin environment, and subsequent vehicle occupant discomfort.

To facilitate the most rapid cabin warm-up, it is desirable that the air-intake initially adjusts to facilitate complete air recirculation as described above. External air would therefore not be allowed access inside the in-cabin system initially.

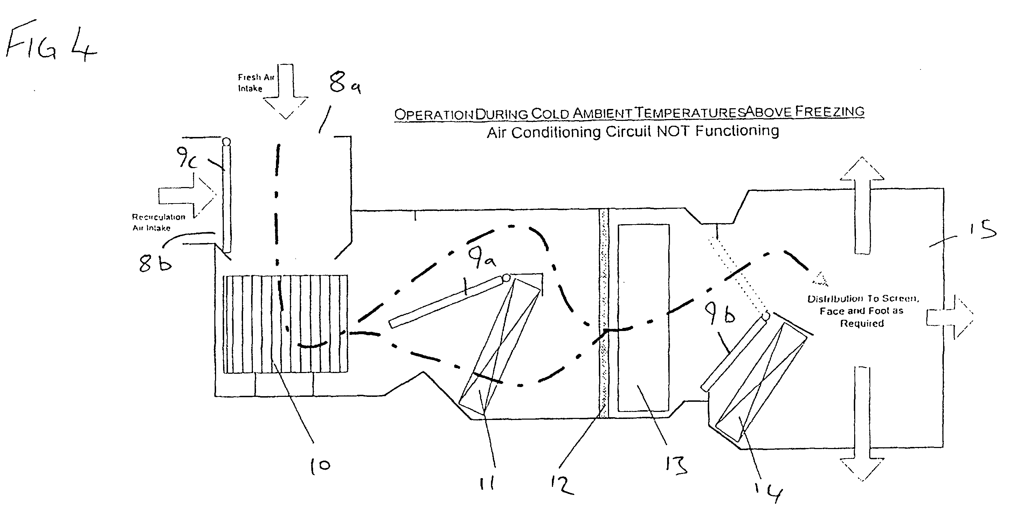

As shown in figure 4, following initial operation in total recirculation mode, recirculated air versus fresh air ratios for intake mixtures will reach fractions representing increased fresh air proportion at shortened timescales.

When ambient temperatures are cool (as opposed to cold/freezing) only small levels of heating might be required in-vehicle. Under such conditions, air drawn from outside the vehicle, through action of the blower unit 10, would be directed, utilising diverter 9a, both across (and around if necessary) the heater source 11, with the aim of achieving a predetermined air temperature condition prior to passage across the evaporator 13. With the refrigeration circuit inoperable, conditioned air would flow through the filter component 12, across the non-functioning evaporator 13, by-pass the secondary condenser 14 via diversion from diverter 9b, and on into the distribution chamber 15 for direction into cabin.

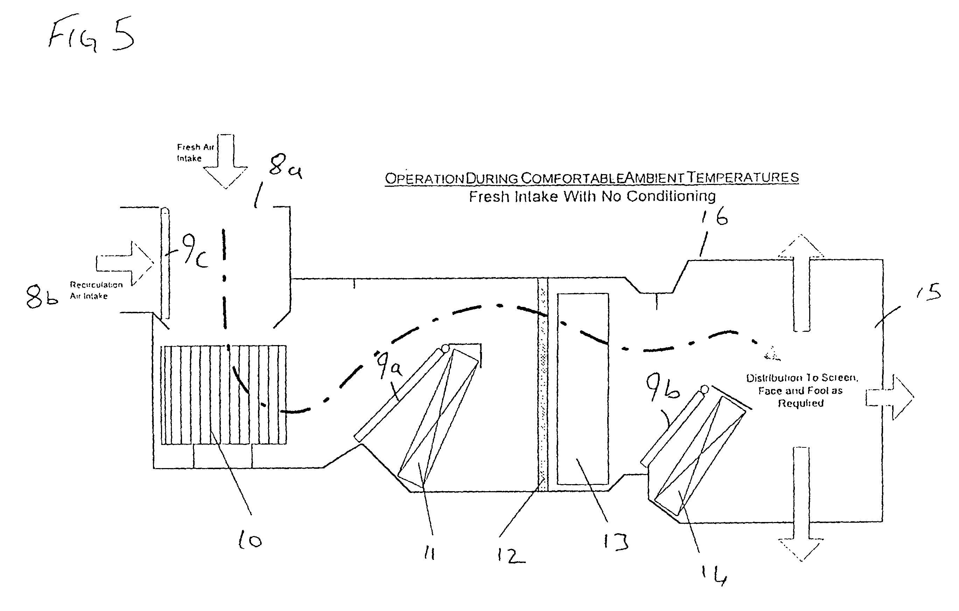

As shown in Figure 5, during mild conditions, the requirement might be for fresh air only to be allowed ingress into the cabin. In such a mode, both the heater source 11, and the secondary condenser should be by-passed. By-passing the evaporator is not necessary.

Air drawn from outside the vehicle, through action of the blower unit 10, is directed to by-pass the heater source 11, utilising diverter 9a. The air passes across filter 12 and passes through evaporator 13. No heat exchange would take place during passage through evaporator 13, because the refrigeration circuit is non-operational.

Unconditioned air exits evaporator 13 and is directed, via the action of diverter 9b, to by-pass the secondary condenser 14. This unconditioned air would then be directed to the mixing and distribution section 15, and subsequently into the car interior airspace via ducts and vents.

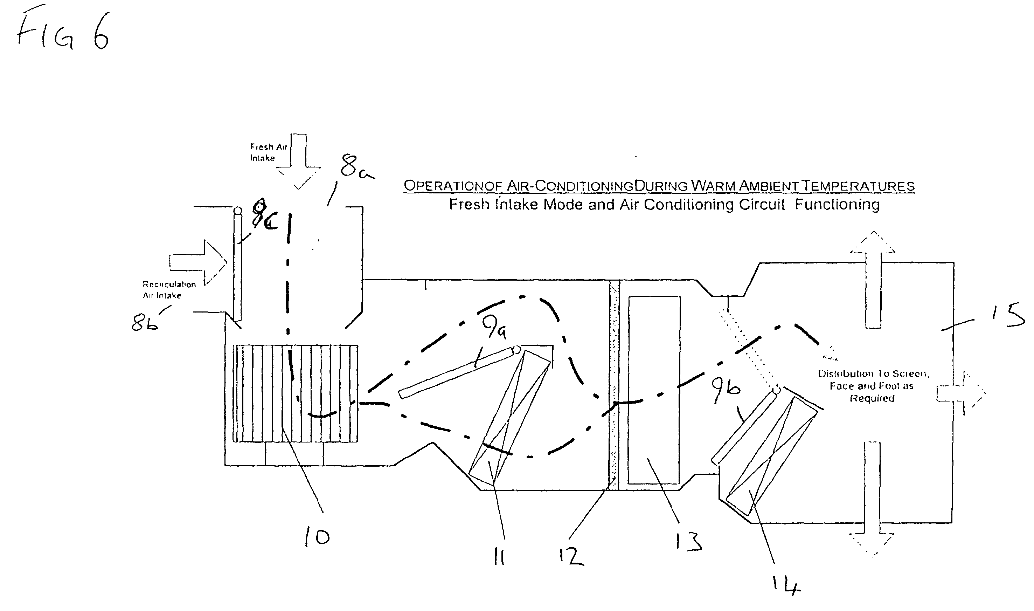

As shown in Figure 6, during warm ambient conditions, the requirement might be for fresh air to be allowed ingress into the cabin at a specific temperature. Air drawn from outside the vehicle, through action of the blower unit 10, would be directed, utilising diverter 9a, both across, and around if necessary, the heater source 11. This could achieve a set air temperature condition prior to passage across the evaporator unit 13.

In this mode, the conventional refrigeration cycle operates. Compressor 1 engages, and high pressure/temperature refrigerant vapour is directed by valve 2 toward the primary condenser 4.

Upon entering the primary condenser 4, the refrigerant vapour is encouraged to condense via heat exchange with the underbonnet airflow across unit 4, thereby releasing the latent heat of condensation to the underbonnet air stream and raising its temperature. Upon exit from unit 4, refrigerant liquid (and any residual vapour) travel to the receiver drier unit 6a, via the unidirectional valve 3c.

Within component 6a, the refrigerant liquid is filtered, desiccated, stored and separated from any vapour fraction. This action ensures only high pressure liquid is drawn from component 6a to enter the expansion valve component 7a. This expansion valve facilitates irreversible, adiabatic expansion of condensed liquid into low pressure liquid ready for evaporation in evaporator 13. The throttling function of this valve is controlled through temperature and pressure feedback measurement from the vapour condition exiting the evaporator 13. Upon entry into the evaporator, the refrigerant liquid is encouraged to evaporate (within the evaporator unit) via heat exchange with the airflow across unit 13 (outside the evaporator unit), thereby drawing the latent heat for vaporisation from the air stream and lowering its temperature (the air temperature having been previously conditioned via air passage through and/or around heater unit 11). Upon exit from evaporator 13, refrigerant vapour travels back to the compressor 1.

Partially conditioned air resulting from passage through, and around heater component 11, passes across the filter 12 and impacts upon the evaporator 13. Heat exchange takes place across evaporator 13, resulting in the consequent lowering of the air temperature to the required temperature level. Additionally, dehumidification is encouraged because moisture from the air stream is encouraged to condense upon the colder surface of evaporator 13. Conditioned air with reduced humidity exits from evaporator 13 and is directed, via the action of flap 9b, to by-pass the non-operational, secondary condenser 14. The air is then directed to the mixing and distribution section 15, and subsequently into the car interior airspace via ducts and vents. The relative mixing of the fresh air, heated air and evaporator duty beneficially requires algorithmic control to achieve the optimum temperature balance.

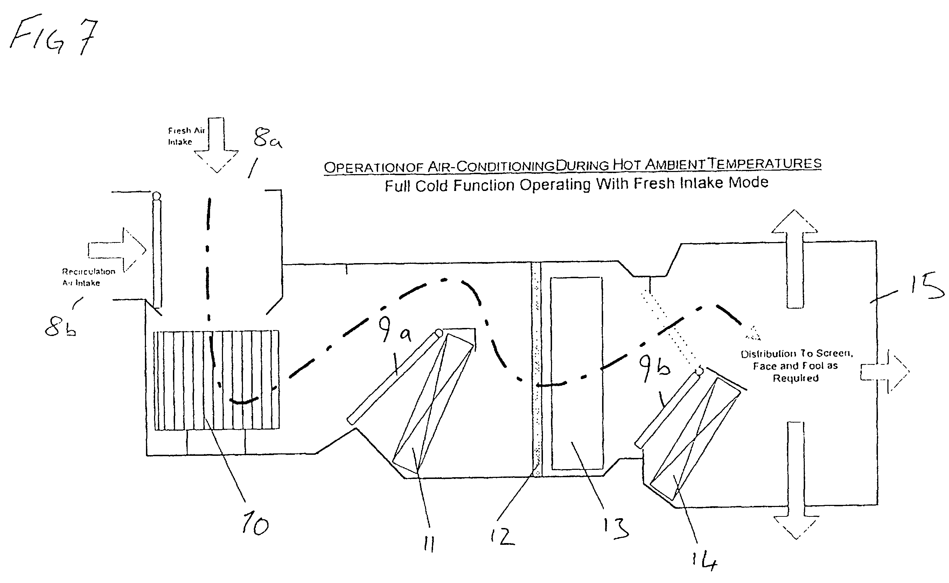

As shown in Figure 7, during hot ambient conditions, the requirement is for cooled, fresh air to be allowed ingress into the cabin at a specific temperature. Air drawn from outside the vehicle, through action of the blower unit 10, is directed, utilising diverter 9a, to by-pass the heater source 11. In this mode, the conventional refrigeration cycle would operate as described above (in relation to figure 6) and as air impacts upon the evaporator unit 13, heat exchange takes place across component 13, resulting in the consequent lowering of the air temperature to the required temperature level.

Additionally, dehumidification is encouraged because the vapour solubility for moisture is reduced with reducing temperature. Conditioned air with reduced humidity exits from evaporator 13 and is directed, via the action of diverter 9b, to by-pass the non-operational, secondary condenser 14. The air is then directed to the mixing and distribution section 15, and subsequently into the car interior airspace via ducts and vents. The evaporator duty might require algorithmic control to achieve the correct temperature balance.

## Claims

1. A vehicle air conditioning system (101) comprising:
i) an air cooling unit (13);
ii) air heating means (11) positioned upstream of the air cooling unit (13); and
iii) second air heating means (14) downstream of the air cooling unit,
**characterized by** the second air heating means comprising a condenser (14); and where first heater bypass means (9a) is provided enabling at least some of the air flow to bypass the first air heating means and/or second heater bypass means (9b) is provided enabling at least some of the air flow to bypass the second air heating means.

2. A vehicle air conditioning system according to claim 1, wherein:
i) the air cooling unit (13) comprises part of a refrigerant fluid circuit; and/or,
ii) wherein the air cooling unit (13) comprises an evaporator.

3. A vehicle air conditioning system according to any preceding claim, wherein the condenser (14) comprising the second air heating means comprises part of a refrigerant fluid circuit.

4. A vehicle air conditioning system according to claim 3, wherein the refrigerant fluid circuit comprising the air conditioning system includes:
i) an evaporator (13) comprising the air cooling unit;
ii) a condenser (14) arranged downstream of the air cooling unit;
iii) a condenser (4) remote from the flow of conditioned air;
iv) switching means (2) for switching the flow of refrigerant to pass through the evaporator and preferentially one or other of the condensers.

5. A vehicle air conditioning system according to claim 4, wherein the refrigerant fluid circuit comprises sub circuits each having a common portion passing through the evaporator and discrete portions each having a respective condenser.

6. A vehicle air conditioning system according to any preceding claim, wherein heater output may be varied to alter or prevent the heating effect on the airflow.

7. A vehicle air conditioning system according to any preceding claim, wherein:
i) the air heating means (11) upstream of the air cooling unit comprises a heater supplied with heat from the engine cooling circuit of the vehicle; or
ii) the air heating means (11) upstream of the air cooling unit comprises an electrical heating device.

8. A method of controlling a vehicle air conditioning system (101) comprising:
i) an air cooling unit (13);
ii) air heating means (11) positioned upstream of the air cooling unit (13); and
iii) second air heating means downstream of the air cooling unit, the second air heating means comprising a condenser (14)
the method comprising:
a) monitoring system demand and/or ambient conditions interior and/or exterior of the vehicle; and,
b) modifying the passage of air in response to the monitoring of step a) to change the proportion of air by passing the air heating means or second air heating means to vary between 0-100 percent; and/or,
c) modifying the heat output of the heating means; and/or,
d) modifying the cooling effect of the cooling unit.

## Patentansprüche

1. Fahrzeug-Klimatisierungssystem (101) mit:
i) einer Luftkühleinheit (13);
ii) einer stromaufwärts von der Luftkühleinheit (13) angeordneten Luftheizvorrichtung (11); und
iii) einer stromabwärts von der Luftkühleinheit angeordneten zweiten Luftheizvorrichtung (14),
**dadurch gekennzeichnet, dass** die zweite Luftheizvorrichtung einen Kondensator (14) aufweist; und eine erste Heizvorrichtungs-Umgehungsvorrichtung (9a) vorgesehen ist, die ermöglicht, dass mindestens ein Teil des Luftstroms die erste Luftheizvorrichtung umgeht, und/oder eine zweite Heizvorrichtungs-Umgehungsvorrichtung (9b) vorgesehen ist, die ermöglicht, dass mindestens ein Teil des Luftstroms die zweite Luftheizvorrichtung umgeht.

2. Fahrzeug-Klimatisierungssystem nach Anspruch 1, bei dem:
i) die Luftkühleinheit (13) einen Teil eines Kühlfluidkreislaufs aufweist; und/oder
ii) die Luftkühleinheit (13) einen Verdampfer aufweist.

3. Fahrzeug-Klimatisierungssystem nach einem der vorhergehenden Ansprüche, bei dem der die zweite Luftheizvorrichtung aufweisende Kondensator (14) einen Teil eines Kühlfluidkreislaufs aufweist.

4. Fahrzeug-Klimatisierungssystem nach Anspruch 3, bei dem der das Klimatisierungssystem aufweisende Kühlfluidkreislauf aufweist:
i) einen Verdampfer (13), der die Luftkühleinheit aufweist;
ii) einen stromabwärts von der Luftkühleinheit angeordneten Kondensator (14);
iii) einen von dem Strom der klimatisierten Luft entfernten Kondensator (4);
iv) eine Schalteinrichtung (2) zum Schalten des Kühlmittel-Stroms derart, dass dieser durch den Verdampfer und vorzugsweise durch den einen oder den anderen der Kondensatoren tritt.

5. Fahrzeug-Klimatisierungssystem nach Anspruch 4, bei dem der Kühlfluidkreislauf Unterkreisläufe aufweist, die jeweils einen gemeinsamen Abschnitt, der durch den Verdampfer verläuft, und diskrete Abschnitte aufweisen, die sämtlich mit einem jeweiligen Kondensator versehen sind.

6. Fahrzeug-Klimatisierungssystem nach einem der vorhergehenden Ansprüche, bei dem die Heizvorrichtungs-Ausgangsteistung variiert werden kann, um den Heizeffekt auf den Luftstrom zu verändern oder zu verhindern.

7. Fahrzeug-Klimatisierungssystem nach einem der vorhergehenden Ansprüche, bei dem:
i) die stromaufwärts von der Luftkühleinheit angeordnete Luftheizvorrichtung (11) eine Heizeinheit aufweist, der Wärme von dem Motorkühlkreislauf des Fahrzeugs zugeführt wird; oder
ii) die stromaufwärts von der Luftkühleinheit angeordnete Luftheizvorrichtung (11) eine elektrische Heizvorrichtung aufweist.

8. Verfahren zum Regeln eines Fahrzeug-Klimatisierungssystems (101) mit:
i) einer Luftkühleinheit (13);
ii) einer stromaufwärts von der Luftkühleinheit (13) angeordneten Luftheizvorrichtung (11); und
iii) einer stromabwärts von der Luftkühleinheit angeordneten zweiten Luftheizvorrichtung, die einen Kondensator (14) aufweist,
mit den folgenden Verfahrensschritten:
a) Überwachen der Systemanforderungs- und/oder Umgebungsbedingungen innerhalb und/oder außerhalb des Fahrzeugs; und
b) Modifizieren des Durchtritts von Luft als Reaktion auf das Überwachen gemäß Schritt a) zum Verändern des Anteils von Luft, indem veranlasst wird, dass die Luftheizvorrichtung oder die zweite Luftheizvorrichtung eine Variation zwischen 0 und 100 Prozent durchlaufen; und/oder
c) Modifizieren der Heiz-Ausgangsleistung der Heizvorrichtung; und/oder
d) Modifizieren des Kühleffekts der Kühleinheit.

## Revendications

1. Système (101) de climatisation pour véhicule comportant :
i) une unité de refroidissement d'air (13),
ii) des moyens de chauffage d'air (11) positionnés en amont de l'unité de refroidissement d'air (13), et
iii) des seconds moyens de chauffage d'air (14) en aval de l'unité de refroidissement d'air,
**caractérisé en ce que** les seconds moyens de chauffage d'air comportent un condenseur (14) et **en ce que** des premiers moyens de dérivation de dispositif de chauffage (9a) sont prévus, permettant à au moins une partie de l'écoulement d'air de contourner les premiers moyens de chauffage d'air, et/ou des seconds moyens de dérivation de dispositif de chauffage (9b) sont prévus, permettant à au moins une partie de l'écoulement d'air de contourner les seconds moyens de chauffage d'air.

2. Système de climatisation pour véhicule selon la revendication 1, dans lequel :
i) l'unité de refroidissement d'air (13) comporte une partie d'un circuit de fluide réfrigérant, et/ou
ii) dans lequel l'unité de refroidissement d'air (13) comporte un évaporateur.

3. Système de climatisation pour véhicule selon l'une quelconque des revendications précédentes, dans lequel le condenseur (14) comportant les seconds moyens de chauffage d'air comporte une partie d'un circuit de fluide réfrigérant.

4. Système de climatisation pour véhicule selon la revendication 3, dans lequel le circuit de fluide réfrigérant comportant le système de climatisation comporte :
i) un évaporateur (13) comportant l'unité de refroidissement d'air,
ii) un condenseur (14) agencé en aval de l'unité de refroidissement d'air,
iii) un condenseur (4) à distance de l'écoulement d'air climatisé,
iv) des moyens de commutation (2) pour commuter l'écoulement de fluide réfrigérant afin qu'il passe à travers l'évaporateur et de préférence dans l'un ou l'autre des condenseurs.

5. Système de climatisation pour véhicule selon la revendication 4, dans lequel le circuit de fluide réfrigérant comporte des sous-circuits ayant chacun une partie commune passant à travers l'évaporateur et des parties discrètes ayant chacune un condenseur respectif.

6. Système de climatisation pour véhicule selon l'une quelconque des revendications précédentes, dans lequel la sortie de dispositif de chauffage peut être variée pour modifier ou empêcher l'effet de chauffage sur l'écoulement d'air.

7. Système de climatisation pour véhicule selon l'une quelconque des revendications précédentes, dans lequel :
i) les moyens de chauffage d'air (11) en amont de l'unité de refroidissement d'air comportent un dispositif de chauffage alimenté en chaleur par le circuit de refroidissement moteur du véhicule, ou
ii) les moyens de cnauffage d'air (11) en amont de l'unité de refroidissement d'air comportent un dispositif de chauffage électrique.

8. Procédé pour commander un système (101) de climatisation pour véhicule, comportant :
i) une unité de refroidissement d'air (13),
ii) des moyens de chauffage d'air (11) positionnés en amont de l'unité de refroidissement d'air (13), et
iii) des seconds moyens de chauffage d'air en aval de l'unité de refroidissement d'air, les seconds moyens de chauffage d'air comportant un condenseur (14)
le procédé comportant les étapes suivantes :
a) surveiller les besoins du système et/ou les conditions ambiantes à l'intérieur et/ou à l'extérieur du véhicule, et
b) modifier le passage d'air en réponse à la surveillance de l'étape a) pour amener la proportion d'air contournant les moyens de chauffage d'air ou les seconds moyens de chauffage d'air à varier entre 0 et 100 pourcent, et/ou
c) modifier la sortie de chaleur des moyens de chauffage, et/ou
d) modifier l'effet de refroidissement de l'unité de refroidissement.
